# EUROPEAN PATENT SPECIFICATION

(11) **EP 2 074 899 B1**
(45) Date of publication and mention of the grant of the patent: **27.02.2013**
(21) Application number: 08153386.1
(22) Date of filing: 27.03.2008
(51) Int. Cl.: A43B 3/10, A43B 7/36, B29C 65/66, B29D 35/00, B29D 35/04, B29C 65/58, B29L 31/50

(54) **Method for manufacturing antistatic shoes**
Verfahren zur Herstellung antistatischer Schuhe
Procédé pour la fabrication de chaussures antistatiques

(30) Priority: 21.12.2007 IT VE20070098
(43) Date of publication of application: 01.07.2009
(73) Proprietor: Thermoshoe di Baldin e C. S.n.c., 35010 Vigonza (Padova) (IT)
(72) Inventor: Baldin, Francesco, 35010, Padova (IT)
(74) Representative: Modiano, Micaela Nadia

(56) References cited:
- EP-A- 0 802 039
- EP-A- 1 025 970
- EP-A- 1 186 403
- EP-A- 1 203 539
- EP-A- 1 803 364

## Description

The present invention relates to a method for manufacturing antistatic shoes.

Currently, particularly in the clinical and hospital field, clogs are used which are constituted by a sole and an upper which is open at the rear and are provided monolithically by molding a plastic material known as SEBS (styrene-ethylene/butylene-styrene).

These known types of clog have the advantage that they can be washed or sterilized easily, for example in an autoclave, but they have a drawback: the plastic material that composes them is in fact electrically insulating and therefore does not allow to discharge to the ground the electrostatic charges that accumulate in the body of the user, for example due to the friction of the user's clothing.

These electrostatic charges are therefore discharged to the ground through the first electrically conducting body with which the user comes into contact, creating an electrical discharge which can damage in particular some electromedical instruments if it flows through them or even just in their vicinity.

In order to allow the electrostatic charges that accumulate in the body of the user to be discharged to the ground, so-called antistatic clogs are used which differ from the ones described above because in their sole there is an insert made of electrically conducting material, known as antistatic material (typically made of SEBS enriched with a carbon filler which makes it electrically conductive), which passes through the sole, connecting the surface on which the sole or heel of the foot rests to the surface of the ground; the electrostatic charges that accumulate in the body of the user can thus be discharged to the ground through such insert.

The insert made of antistatic material, typically obtained by molding, comprises an elongated lamina which during use is arranged at the lower surface of the sole arranged in contact with the ground and shaped so as to follow the shape of the lower surface; a pin protrudes approximately at right angles from the lamina and passes through the sole, its upper end being arranged flush with the resting surface of the sole or heel of the foot of the user, so as to come into contact with the foot during use.

The insert is inserted in the mold suitable to obtain the clog approximately at the longitudinal central axis of the lower surface of the sole; by injecting SEBS in the mold, the SEBS, by curing, bonds with the antistatic insert, so that when the mold is opened the insert is monolithically embedded within the sole, so as to constitute a single body therewith.

These known types of shoe, however, have a drawback: due to the high density of SERBS, they have a rather high weight and therefore can tire the user during walking, particularly in case of prolonged use; by way of example, a single size 41/42 clog can weight as much as approximately 400 grams.

In order to try to contain the weight of these known types of clog, it is known to reduce their sole resting surface, but this limits the ground grip of the clogs and may cause slipping while walking.

Further, the plastic material of which these known types of clog are made is rather rigid, and this can reduce user comfort.

In order to improve comfort it is known to introduce in known types of clog appropriately provided insoles made of a softer material and provided with a suitable hole to allow the passage of the pin of the antistatic insert (which in this case is higher, so that its upper end lies flush with the upper surface of the insole); such insoles, however, further increase the weight of the clog and also increase its constructive complexity and cost, and require removal of the insole in order to be sterilized.

EP-A-1 186 403 discloses a method for forming a shoe which discharges static electricity by moudling using two injection ducts one of which puts the antistatic mixture to form a central predominance part for ground contact on a foot support base to transmit the electrostatic energy, while the other injection duct puts the material to form the remaining insulating part to complete the shoe.

EP-A-1 803 364 disclose a method of injection moulding shoes having a base section with upper and sole wherein the upper includes a solid horizontal portion and a vertical portion in which is formed a plurality of ventilators with liquid conductors formed around each of the plurality of ventilators.

EP-A-1 203 539 discloses an antistatic shoe sole comprising a hole and a plug in the hole, the plug comprising a conducting material for reducing static electricity build up in the shoe sole during use.

The aim of the present invention is to solve the above-mentioned problems, eliminating the drawbacks of the cited background art, by providing a method which allows to provide an antistatic shoe which can be washed and sterilized easily and quickly and at the same time maintains a low weight.

Within this aim, an object of the invention is to provide a method for obtaining an antistatic shoe which provides great wearing comfort.

Another object is to provide a method for obtaining an antistatic shoe which has high ground grip, thus reducing the risk of slipping.

Another object of the invention is to provide a method for obtaining an antistatic shoe which has low production costs.

In accordance with the invention, there is provide a method for manufacturing antistatic shoes as defined in the appended claims.

Further characteristics and advantages of the invention will become better apparent from the following detailed description of a particular but not exclusive embodiment thereof, illustrated by way of non-limiting example in the accompanying drawings, wherein:

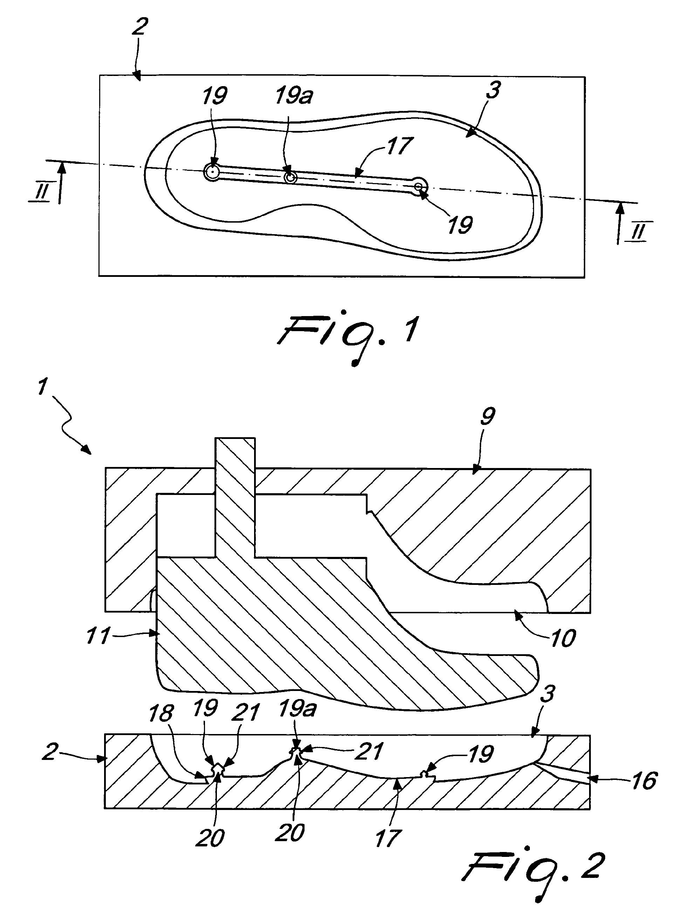

Figure 1 is a plan view of the lower part of a mold used in the method according to the invention;
Figure 2 is a sectional view, taken along the line II-II of Figure 1, of the mold of Figure 1 in the open condition;
Figures 3 and 4 are views, similar to the preceding one, of the mold in the closed condition, respectively before and during the injection of the plastic material;
Figures 5 and 6 are schematic sectional views, taken along a longitudinal central plane, of a shoe directly after its molding, respectively before and after the free expansion of the plastic material;

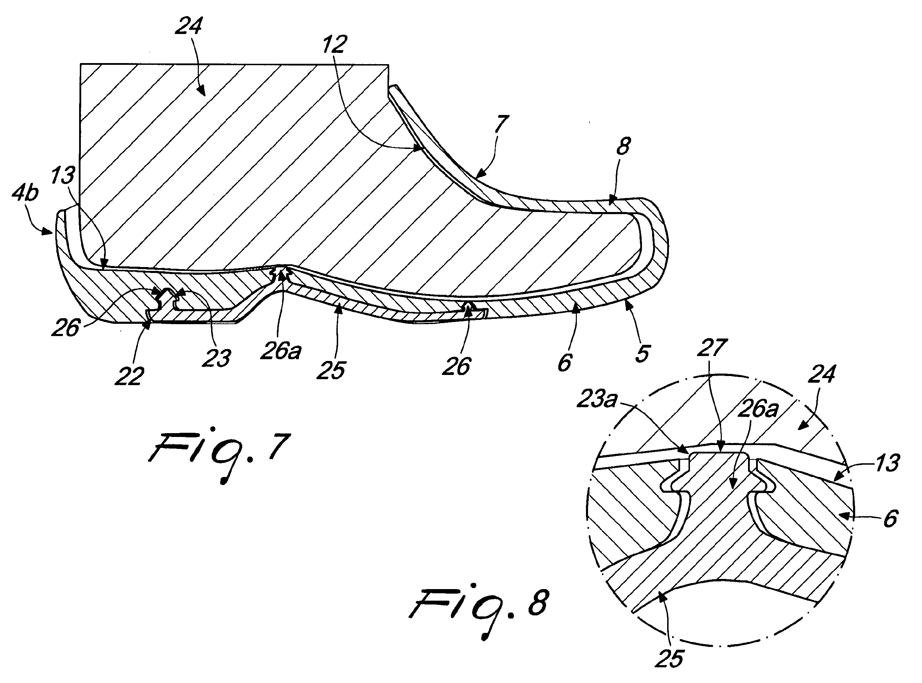

Figure 7 is a sectional view, taken along a longitudinal central plane, of a shoe, with a last inserted therein, after the application of the insert and before shrinkage due to cooling of the plastic material;
Figure 8 is an enlarged-scale view of a detail of Figure 7;

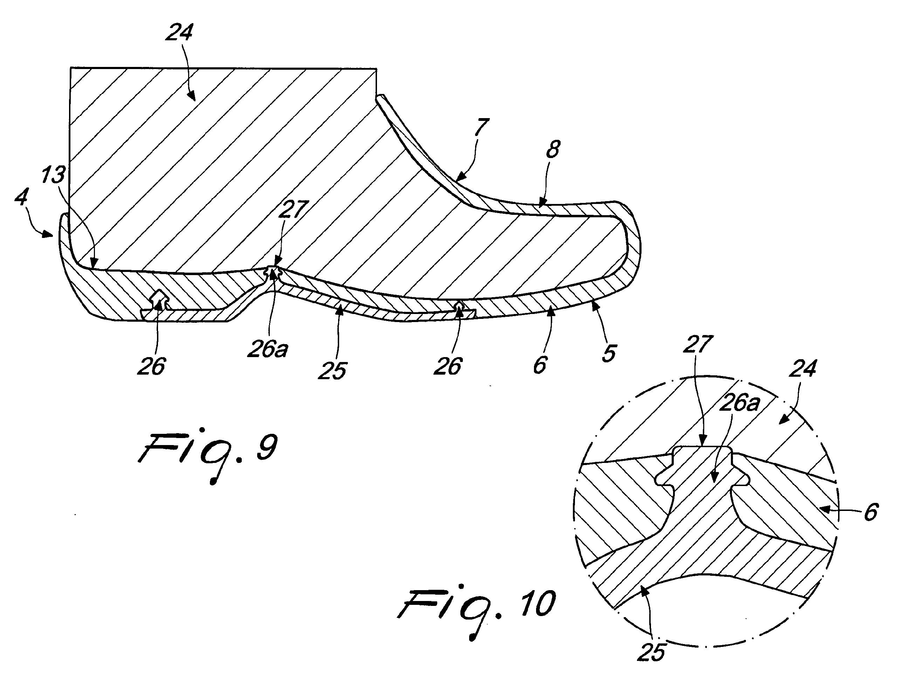

Figure 9 is a sectional view, taken along a longitudinal central plane, of the shoe of Figure 7 after shrinkage by cooling of the plastic material;
Figure 10 is an enlarged-scale view of a detail of Figure 9;

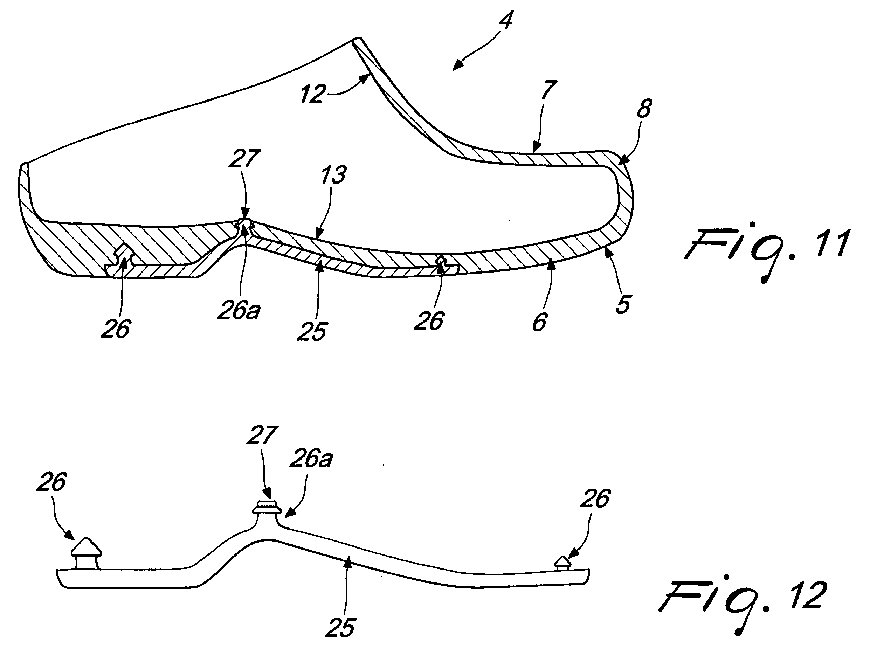

Figure 11 is a sectional view, taken along a longitudinal central plane, of a shoe obtained with the method according to the invention;
Figure 12 is a side view of the insert according to the preceding figures.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

The method according to the invention uses a mold 1 which is constituted preferably by a lower mold part 2, which is preferably metallic and inside which there is at least one first seat 3, which is substantially shaped complementarily to a portion of a shoe 4a, also known as intermediate shoe, which is appropriately reduced, in a chosen scale, with respect to a shoe 4 to be obtained.

In the embodiment shown in the accompanying figures, in the lower mold part 2 there is one first seat 3 which is shaped substantially complementarily, in reduced scale, with respect to a lower surface 5 for contact with the ground of a sole 6 and with respect to part of an outer surface 7 of an upper 8 of the shoe 4 to be obtained.

The mold 1 further comprises an upper mold part 9, which is preferably metallic and within which there is at least one second seat 10 which is substantially shaped complementarily, in a suitably reduced scale (the same one used to obtain the first seat 3), with respect to an additional portion of the shoe 4 to be obtained; in the embodiment shown in the accompanying figures, in the upper mold part 9 there is a second seat 10, which is shaped substantially complementarily, in reduced scale, with respect to the remaining portion of the outer surface 7 of the upper 8 of the shoe 4 to be obtained.

Advantageously, a male plug 11 is slidingly associated with the upper mold part 9 and is shaped substantially complementarily, in reduced scale (the same scale used for the first and second seats) with respect to an internal surface 12 of the upper 8 and the surface for resting the foot of the user, designated by the reference numeral 13, of the shoe 4 to be obtained.

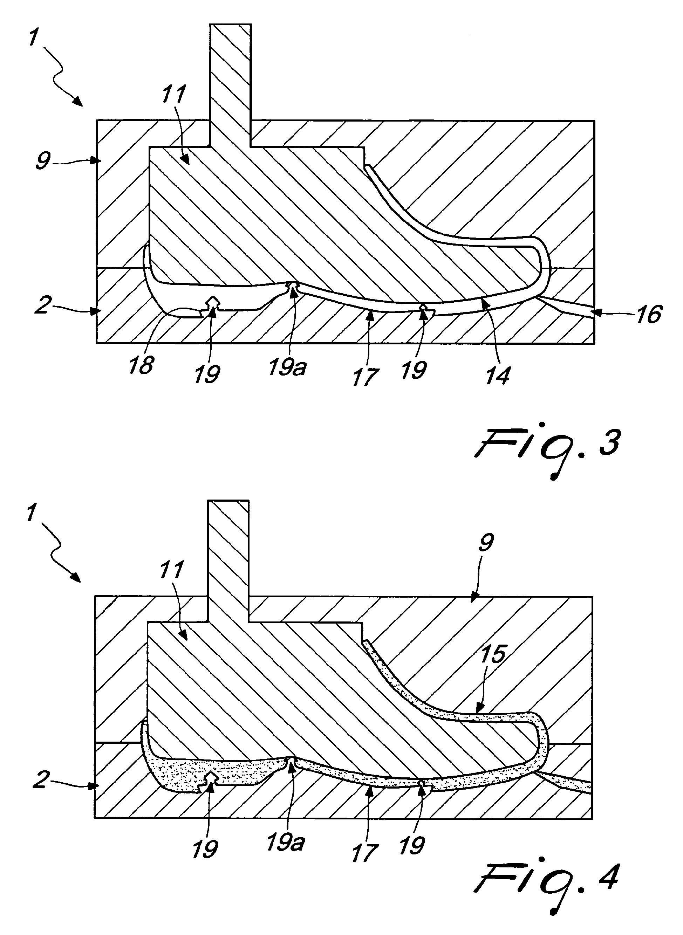

As shown for example in Figure 3, by closing the mold 1 the first seat 3, the second seat 10 and the male plug 11 form a cavity 14, which is shaped approximately complementarily with respect to the intermediate shoe 4a, on a scale which is suitably reduced with respect to the final dimensions of the shoe 4.

Advantageously, the dimensions of the cavity 14 are smaller than the final dimensions of the shoe 4 in a scale of approximately 1:1.6.

Advantageously, the mold 1 has means for feeding into the cavity 14 a plastic material 15 in the liquid state, particularly the plastic material known as EVA (ethyl vinyl acetate); in the embodiment shown in the accompanying figures, such feeding means are constituted by an appropriately provided channel 16 which is formed preferably in the lower mold part 2.

Advantageously, the mold 1 comprises means for heating the internal walls of the cavity 14 and of the channel 16, not shown in the accompanying figures, which are adapted to facilitate the injection of the plastic material 15 in the liquid state; advantageously, the temperature of the internal surface of the cavity 14 and of the channel 16 is approximately 130°C.

Advantageously, the internal surface of the cavity 14 has, at the region that forms the lower surface 5 for resting on the ground of the sole 6 of the intermediate shoe 4a, at least one raised portion 17, which has a preferably approximately rectangular plan shape and is arranged approximately at the longitudinal central axis of the sole 6; advantageously but not necessarily, the lateral surface 18 of the protrusion 17 is flared and widens radially away from the lower ground resting surface 5 of the sole 6.

One or more pins 19 protrude from the raised portion 17, at least one having such a height as to abut with its upper end, in the closed condition of the mold 1 (shown for example in Figure 3), against the internal surface of the cavity 14 at at least part of the region that forms the resting surface 13 of the foot of the user.

In the embodiment shown in the accompanying figures, there are three pins, one of which, designated by the reference numeral 19a, is arranged approximately at the central region of the plantar arch; it has such a height as to abut with its upper end, in the closed condition of the mold 1, against the lower surface of the male plug 11 at the resting surface 13 for the foot of the user.

Advantageously, the one or more pins 19 are approximately T-shaped, with a stem 20 which is substantially cylindrical and a head 21 which is preferably approximately cone- or frustum-shaped, in a cross-section taken along a diametrical central plane.

The method according to the invention therefore entails closing the mold 1 and injecting into the cavity 14, which is appropriately heated, the plastic material 15 in the liquid state through the channel 16.

The mold 1 is then kept in the closed condition for a period which is sufficient to achieve the solidification of the plastic material (in general for approximately 5 minutes), thus obtaining, inside the mold 1, the intermediate shoe 4a, which has smaller dimensions than the final ones of the shoe 4 to be obtained, according to a scale factor which is advantageously approximately equal to 1:1.6.

In the sole 6 of the intermediate shoe 4a thus obtained there is, at the raised portion 17, a slot 22 which is shaped complementarily thereto and is connected to one or more holes 23 formed by the pins 19 and 19a and shaped complementarily thereto, at least one of which is a through hole.

In the embodiment shown in the accompanying figures, there are therefore three holes, of which only one, designated by the reference numeral 23a, is arranged approximately at the central region of the plantar arch and passes completely through the sole 6, connecting the slot 22 to the resting surface 13 of the foot of the user.

The mold 1 is then opened by lifting the upper mold part 9 away from the lower mold part 2; the lifting of the upper mold part 9 causes the simultaneous partial descent therefrom of the male plug 11.

Due to the specific chemical/physical properties of the plastic material known as EVA, once it has solidified, its volume increases considerably with respect to when it is in the liquid state; when the mold 1 is opened, the plastic material known as EVA expands freely, and the intermediate shoe 4a thus increases suddenly its dimensions, simultaneously protruding suddenly from the mold 1.

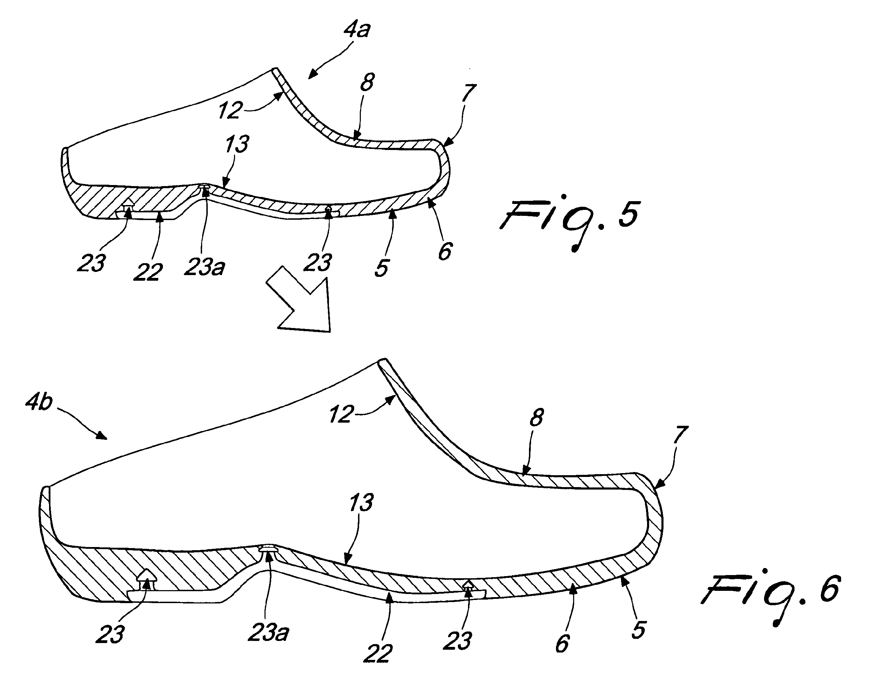

As shown schematically in Figures 5 and 6, the dimensions of the intermediate shoe 4a thus increase suddenly, with respect to when it was contained in the cavity 14, according to a scale factor which is typically slightly greater than approximately 1.6:1.

In this step of the method according to the invention, a shoe 4b is obtained whose dimensions are slightly larger than the final dimensions of the shoe 4, since once it has solidified, the plastic material known as EVA, by cooling down, slightly decreases its dimensions with respect to the maximum ones reached during expansion.

Within a preset time, generally equal to approximately 30 seconds, after extraction of the shoe 4b from the mold 1, an appropriately provided last 24 is inserted therein which is adapted to limit the shrinkage of the shoe 4b due to the cooling of said plastic material; advantageously, the last 24 is shaped substantially complementarily with respect to the internal surface 12 of the upper 8 and to the resting surface 13 of the foot of the user of the shoe 4 to be obtained, and is made of a material which has low thermal conductivity, such as for example wood or plastics.

The method according to the invention therefore entails inserting in the slot 22 formed in the sole 6 at least one insert 25 made of antistatic material (such as for example the material known as SEBS, enriched with a carbon filler which makes it electrically conductive), which is shaped approximately complementarily thereto but in a slightly reduced scale.

Advantageously, one or more pins 26 protrude approximately at right angles from the insert 25 and are arranged at the one or more holes 23, of which at least one, designated by the reference numeral 26a, is arranged within the hole of the one or more holes that is a through hole, designated by the reference numeral 23a, and is arranged with its upper end 27, which is advantageously substantially flat, so that it is approximately flush or protrudes slightly from the resting surface 13 of the foot of the user.

Advantageously, the pins 26 and 26a are shaped substantially complementarily with respect to the respective holes 23 and 23a, in a slightly reduced scale with respect to the dimensions of the shoe 4b before said shoe cools.

The method according to the invention then provides for the free cooling of the shoe 4b, with consequent shrinkage of the plastic material known as EVA and reduction of the dimensions of the shoe 4b; the slot 22 and the one or more holes 23 and 23a thus reduce their dimensions, and their inner lateral surface therefore fastens respectively onto the insert 25 and onto the one or more pins 26 and 26a, thus rigidly coupling the insert 25 to the sole 6.

The presence of the last 24 prevents the dimensions of the shoe 4b from decreasing beyond a preset level.

Once the dimensions of the shoe 4b are stable, the last 24 can be extracted, thus obtaining the shoe 4; the free cooling of the shoe 4b to complete stabilization of its dimensions lasts in general approximately 5 minutes.

It has thus been found that the invention has achieved the intended aim and objects, a method having been devised which allows to obtain an antistatic shoe by using the plastic material known as EVA, which can be sterilized easily and further has a very low density; the shoe is therefore very light and can be used therefore continuously without tiring the user excessively. For example, a single size 41/42 shoe can weigh approximately 140 grams, in comparison with the approximately 400 grams of a single antistatic shoe of the known type made of the material known by the acronym SEBS.

Moreover, the plastic material known as EVA is very soft, and this increases wear comfort for the user.

Further, thanks to the low relative density of the plastic material known as EVA, it is possible to increase the plan dimensions of the ground resting surface without affecting significantly the weight of the shoe; in this manner, it is therefore possible to obtain a shoe which has great ground grip without increasing its weight excessively.

Moreover, the method according to the invention allows to obtain an antistatic shoe with low production costs.

The invention is of course susceptible of numerous modifications and variations, all of which are within the scope of the appended claims.

The materials used, as well as the dimensions that constitute the individual components of the invention, may be more pertinent according to specific requirements.

The various means for performing certain different functions need not certainly coexist only in the illustrated embodiment but can be present per se in many embodiments, including ones that are not illustrated.

The characteristics indicated as advantageous, convenient or the like may also be omitted or be replaced with equivalents.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for manufacturing antistatic shoes (4), comprising the steps of:
a) closing a mold (1) inside which there is a cavity (14), which is shaped approximately complementarily with respect to a shoe (4a) in a scale which is suitably reduced with respect to the final dimensions of said shoe (4), its internal surface having, at the region that forms the lower surface (5) of the sole (6), at least one raised portion (17) from which one or more pins (19) protrude, at least one (19a) of said pins having such a height as to abut, with its upper end, in the closed condition of said mold (1), against the internal surface of said cavity (14) at at least part of the region that forms the resting surface (13) of the foot of the user;
b) heating the internal walls of said cavity (14) to a suitable temperature and injecting therein plastic material (15) known as EVA (ethyl vinyl acetate) in the liquid state;
c) keeping said mold (1) in the closed condition until said plastic material (15) solidifies, so as to obtain a shoe (4a) in reduced scale with respect to its final dimensions and in the sole (6) of which there is, at said at least one raised portion (17), at least one slot (22) which is connected to one or more holes (23), formed by said one or more pins (19), at least one (23a) of which is a through hole;
d) opening said mold (1) and extracting the resulting shoe (4a), and allowing the free expansion of said plastic material (15), with consequent increase in the dimensions of said shoe (4b);
e) inserting in said shoe (4b), thus obtained, a last (24) which is adapted to limit the shrinkage of said shoe (4b) during the cooling of said plastic material (15);
f) inserting, in said at least one slot (22) formed in said sole (6), at least one insert (25) made of antistatic material, which is approximately shaped complementarily thereto but in a slightly reduced scale, and having one or more pins (26) arranged at said one or more holes (23) provided in said sole (6), at least one (26a) of which, arranged within the one (23a) of said one or more holes that is a through hole, is arranged so that its upper end (27) is approximately flush with, or protrudes from, said surface (13) for resting the foot of the user;
g) allowing the free cooling of said shoe (4b) and the shrinkage of said plastic material (15), with consequent reduction of the dimensions of said shoe (4) thus obtained, so as to achieve the fastening of said one or more pins (26) within said one or more holes (23) and of said at least one insert (25) in said at least one slot (22);
h) removing said last (24) from said shoe (4) after stabilization of the dimensions of said shoe (4).

2. The method according to claim 1, **characterized in that** said mold (1) is selected to be constituted by a lower mold part (2), which is metallic and within which there is at least one first seat (3) which is shaped substantially complementarily with respect to a portion of a shoe (4a) in a scale which is reduced with respect to the final dimensions of said shoe (4).

3. The method according to claim 2, **characterized in that** said first seat (3) formed in said mold (1) is substantially shaped complementarily, on a reduced scale, with respect to said lower surface (5) of said sole (6) and with respect to part of the outer surface (7) of the upper (8) of said shoe (4) to be obtained.

4. The method according to claim 3, **characterized in that** said mold (1) comprises an upper mold part (9), which is preferably metallic and within which at least one second seat (10) is formed which is substantially shaped complementarily, in the same scale used to obtain said first seat (3), with respect to an additional portion of said shoe (4) to be obtained.

5. The method according to claim 4, **characterized in that** said second seat (10) formed in said mold (1) is substantially shaped complementarily, on the same scale used to obtain said first seat (3), with respect to the remaining portion of said outer surface (7) of said upper (8) of said shoe (4) to be obtained.

6. The method according to claim 5, **characterized in that** a male plug (11) is slidingly associated with said upper mold part (9) and is shaped substantially complementarily, in the same scale used for said first and second seats (3,10), with respect to the internal surface (12) of said upper (8) and said surface (13) for resting the foot of the user of said shoe (4) to be obtained.

7. The method according to claim 6, **characterized in that** in the closed condition of said mold (1) said first and second seats (3,10) and said male plug (11) form said cavity (14) within which said plastic material (15) in the liquid state is injected.

8. The method according to claim 7, **characterized in that** the dimensions of said cavity (14) are reduced, with respect to the final dimensions of said shoe (4), in a scale of approximately 1:1.6.

9. The method according to one or more of the preceding claims, **characterized in that** said mold (1) has means (16) for feeding into said cavity (14) said plastic material (15) in the liquid state.

10. The method according to claim 9, **characterized in that** said feeder means are constituted by a channel (16) which is provided preferably within said lower mold part.

11. The method according to claim 10, **characterized in that** said mold (1) comprises means for heating the internal walls of said cavity (14) and of said channel (16) which are adapted to facilitate the injection of said plastic material (15) in the liquid state.

12. The method according to claim 11, **characterized in that** the temperature of the internal surface of said cavity (14) and of said channel (16), during the injection of said plastic material (15), is approximately 130°C.

13. The method according to one or more of the preceding claims, **characterized in that** said at least one raised portion (17) has an approximately rectangular plan shape and is arranged approximately at the longitudinal central axis of said sole (6).

14. The method according to claim 13, **characterized in that** the lateral surface (18) of said raised portion (17) is flared and expands radially away from said lower surface (5) of said sole (6).

15. The method according to claim 14, **characterized in that** three pins (19) protrude from said raised portion (17), one (19a) of said pins being arranged approximately at the central region of the plantar arch and having such a height as to abut with its upper end, in the closed condition of said mold (1), against the lower surface of said male plug (11) at said surface (13) for resting the foot of the user.

16. The method according to claim 15, **characterized in that** said pins (19) are approximately T-shaped, with a stem (20) which is substantially cylindrical and a head (21) which is preferably approximately cone- or frustum-shaped in a cross-section taken along a diametrical central plane.

17. The method according to one or more of the preceding claims, **characterized in that** after the injection of said plastic material (15) in the liquid state said mold (1) is kept in the closed condition for approximately 5 minutes.

18. The method according to one or more of the preceding claims, **characterized in that** in said sole (6) of said intermediate shoe (4a) there are three holes (23), of which only one is arranged approximately at the central region of said plantar arch and passes completely through said sole (6), connecting said slot (22) to said resting surface (13) of the foot of the user.

19. The method according to claim 8, **characterized in that** the opening of said mold (1) occurs by lifting from said lower mold part (2) said upper mold part (9), with simultaneous partial descent from the latter of said male plug (11).

20. The method according to one or more of the preceding claims, **characterized in that** during or after extraction from said mold (1), the dimensions of said shoe (4a) increase suddenly, with respect to when it is contained in said cavity (14), according to a scale factor which is slightly greater than approximately 1.6:1.

21. The method according to one or more of the preceding claims, **characterized in that** said last (24) is inserted in said shoe (4b) approximately 30 seconds after extraction from the mold (1).

22. The method according to one or more of the preceding claims, **characterized in that** said last (24) is shaped substantially complementarily with respect to said internal surface (12) of said upper (8) and said surface (13) for the resting of the foot of the user of said shoe (4) to be obtained, and is made of a material which has low thermal conductivity.

23. The method according to one or more of the preceding claims, **characterized in that** said last (24) is kept in said shoe (4), during the free cooling thereof, for approximately 5 minutes.

24. The method according to one or more of the preceding claims, **characterized in that** said insert (25) is made of the material known by the acronym SEBS, enriched with a carbon filler which makes it electrically conducting.

## Patentansprüche

1. Ein Verfahren zur Herstellung antistatischer Schuhe (4), das folgende Schritte umfasst:
a) Schließen einer Form (1), innerhalb derer sich ein Hohlraum (14) befindet, der ungefähr komplementär zu einem Schuh (4a) geformt ist, in einer Größenordnung, die im Verhältnis zu den Endmaßen des Schuhs (4) angemessen verkleinert ist, wobei seine innere Oberfläche in dem Bereich, der die untere Oberfläche (5) der Sohle (6) bildet, mindestens einen erhöhten Abschnitt (17) hat, aus dem ein oder mehrere Stifte (19) herausragen, wobei mindestens einer (19a) der Stifte eine solche Höhe hat, dass er mit seinem oberen Ende, im geschlossenen Zustand der Form (1), gegen die innere Oberfläche des Hohlraums (14) in zumindest einem Teil des Bereichs anstößt, der die Auflageoberfläche (13) des Fußes des Benutzers bildet,
b) Erhitzen der Innenwände des Hohlraums (14) auf eine geeignete Temperatur und dort hinein Einspritzen von Kunststoffmaterial (15), das als EVA (Ethylvinylacetat) bekannt ist, in flüssigem Zustand,
c) Halten der Form (1) in dem geschlossenen Zustand, bis das Kunststoffmaterial (15) erstarrt, um so einen Schuh (4a) in verkleinertem Maßstab im Verhältnis zu seinen Endmaßen zu erhalten, und in dessen Sohle (6) sich, in dem mindestens einen erhöhten Abschnitt (17), mindestens ein Schlitz (22) befindet, der mit einem oder mehreren Löchern (23), geformt von einem oder mehreren Stiften (19), verbunden ist, von denen mindestens eines (23a) eine Durchgangsbohrung ist,
d) Öffnen der Form (1) und Extrahieren des resultierenden Schuhs (4a) und Ermöglichen der freien Ausdehnung des Kunststoffmaterials (15), mit daraus folgender Vergrößerung der Maße des Schuhs (4b),
e) Einsetzen eines Leistens (24) in den so erhaltenen Schuh (4b), der ausgebildet ist, um die Schrumpfung des Schuhs (4b) während des Abkühlens des Kunststoffmaterials (15) zu begrenzen,
f) Einsetzen in den mindestens einen Schlitz (22), der in der Sohle (6) geformt ist, von mindestens einem Einsatz (25) aus antistatischem Material, welcher ungefähr komplementär dazu geformt ist, aber in etwas reduziertem Maßstab, und einen oder mehrere Stifte (26) hat, angeordnet an einem oder mehreren Löchern (23), die in der Sohle (6) angebracht sind, von denen mindestens einer (26a), angebracht in dem einen (23a) der einen oder mehreren Löcher, das eine Durchgangsbohrung ist, so angeordnet ist, dass sein oberes Ende (27) mit der Oberfläche (13) zur Aufnahme des Fußes des Benutzers ungefähr bündig ist oder aus ihr herausragt,
g) Ermöglichen der freien Abkühlung des Schuhs (4b) und der Schrumpfung des Kunststoffmaterials (15), mit einer daraus folgenden Reduzierung der Maße des so gewonnenen Schuhs (4), um so die Befestigung der einen oder mehreren Stifte (26) in einem oder mehreren Löchern (23) und des mindestens einen Einsatzes (25) in dem mindestens einen Schlitz (22) zu erzielen,
h) Entfernen des Leistens (24) von dem Schuh (4) nach Stabilisierung der Maße des Schuhs (4).

2. Das Verfahren gemäß Anspruch 1, **dadurch gekennzeichnet, dass** die Form (1) ausgewählt ist, um aus einem unteren Formteil (2) zu bestehen, der metallisch ist und in dem sich mindestens ein erster Sitz (3) befindet, der im Wesentlichen komplementär zu einem Teil eines Schuhs (4a) ist, in einem Maßstab, welcher im Verhältnis zu den Endmaßen des Schuhs (4) reduziert ist.

3. Das Verfahren gemäß Anspruch 2, **dadurch gekennzeichnet, dass** der erste Sitz (3), der in der Form (1) geformt ist, im Wesentlichen komplementär, in einem verringerten Maßstab, zu der unteren Oberfläche (5) der Sohle (6) und zu einem Teil der äußeren Oberfläche (7) des Schafts (8) des zu erhaltenden Schuhs (4) geformt ist.

4. Das Verfahren gemäß Anspruch 3, **dadurch gekennzeichnet, dass** die Form (1) einen oberen Formteil (9) umfasst, der vorzugsweise metallisch ist und in dem mindestens eine zweite Auflagefläche (10) geformt ist, welcher, in demselben Maßstab, der verwendet wird, um den ersten Sitz (3) zu gewinnen, im Wesentlichen komplementär zu einem zusätzlichen Teil des zu erhaltenden Schuhs (4) geformt ist.

5. Das Verfahren gemäß Anspruch 4, **dadurch gekennzeichnet, dass** der zweite Sitz (10), der in der Form (1) geformt ist, in demselben Maßstab, der verwendet wird, um den ersten Sitz (3) zu gewinnen, im Wesentlichen komplementär zum restlichen Teil der äußeren Oberfläche (7) des Schafts (8) des zu erhaltenden Schuhs (4) geformt ist.

6. Das Verfahren gemäß Anspruch 5, **dadurch gekennzeichnet, dass** ein Stempel (11) verschiebbar mit dem oberen Formteil (9) verbunden und, in demselben Maßstab, der für den ersten und den zweiten Sitz (3, 10) verwendet wird, im Wesentlichen komplementär zur inneren Oberfläche (12) des Schafts (8) und zu der Oberfläche (13) zum Aufliegen des Fußes des Benutzers des zu erhaltenden Schuhs (4) geformt ist.

7. Das Verfahren gemäß Anspruch 6, **dadurch gekennzeichnet, dass** im geschlossenen Zustand der Form (1) der erste und zweite Sitz (3, 10) und der Stempel (11) den Hohlraum (14) bilden, in den das Kunststoffmaterial (15) im flüssigen Zustand eingespritzt wird.

8. Das Verfahren gemäß Anspruch 7, **dadurch gekennzeichnet, dass** die Maße des Hohlraums (14) im Verhältnis zu den Endmaßen des Schuhs (4) in einem Verhältnis von ungefähr 1:1,6 reduziert sind.

9. Das Verfahren gemäß einem oder mehreren der obigen Ansprüche, **dadurch gekennzeichnet, dass** die Form (1) Mittel (16) zum Zuführen des Kunststoffmaterials (15) in den Hohlraum (14) im flüssigen Zustand hat.

10. Das Verfahren gemäß Anspruch 9, **dadurch gekennzeichnet, dass** die Zuführmittel in einem Kanal (16) bestehen, der vorzugsweise in dem unteren Formteil bereitgestellt ist.

11. Das Verfahren gemäß Anspruch 10, **dadurch gekennzeichnet, dass** die Form (1) Mittel zum Erhitzen der Innenwände des Hohlraums (14) und des Kanals (16) hat, die ausgebildet sind, um das Einspritzen des Kunststoffmaterials (15) im flüssigen Zustand zu erleichtern.

12. Das Verfahren gemäß Anspruch 11, **dadurch gekennzeichnet, dass** die Temperatur der inneren Oberfläche des Hohlraums (14) und des Kanals (16) während des Einspritzens des Kunststoffmaterials (15) ungefähr 130°C beträgt.

13. Das Verfahren gemäß einem oder mehreren der obigen Ansprüche, **dadurch gekennzeichnet, dass** der mindestens eine erhöhte Abschnitt (17) einen ungefähr rechteckigen Grundriss hat und ungefähr an der Mittel-Längsachse der Sohle (6) angeordnet ist.

14. Das Verfahren gemäß Anspruch 13, **dadurch gekennzeichnet, dass** die seitliche Oberfläche (18) des erhöhten Abschnitts (17) konisch erweitert ist und radial fort von der unteren Oberfläche (5) der Sohle (6) expandiert.

15. Das Verfahren gemäß Anspruch 14, **dadurch gekennzeichnet, dass** drei Stifte (19) aus dem erhöhten Abschnitt (17) herausragen, wobei einer (19a) der Stifte ungefähr im mittleren Bereich der Fußwölbung angeordnet ist und eine solche Höhe hat, dass er mit seinem oberen Ende, im geschlossenen Zustand der Form (1), gegen die untere Oberfläche des Stempels (11) an der Oberfläche (13) zum Aufliegen des Fußes des Benutzers anstößt.

16. Das Verfahren gemäß Anspruch 15, **dadurch gekennzeichnet, dass** die Stifte (19) ungefähr T-förmig sind, mit einem Schaft (20), der im Wesentlichen zylindrisch ist, und einem Kopf (21), der in einem Querschnitt entlang einer diametralen zentralen Ebene vorzugsweise ungefähr kegel- oder kegelstumpfförmig ist.

17. Das Verfahren gemäß einem oder mehreren der obigen Ansprüche, **dadurch gekennzeichnet, dass** nach dem Einspritzen des Kunststoffmaterials (15) im flüssigen Zustand die Form (1) ungefähr 5 Minuten lang in geschlossenem Zustand gehalten wird.

18. Das Verfahren gemäß einem oder mehreren der obigen Ansprüche, **dadurch gekennzeichnet, dass** sich in der Sohle (6) des intermediären Schuhs (4a) drei Löcher (23) befinden, von denen nur eines ungefähr im zentralen Bereich der Fußwölbung angeordnet ist und durch die ganze Sohle (6) verläuft, wobei es den Schlitz (22) mit der Auflageoberfläche (13) des Fußes des Benutzers verbindet.

19. Das Verfahren gemäß Anspruch 8, **dadurch gekennzeichnet, dass** das Öffnen der Form (1) durch Abheben des oberen Formteils (9) von dem unteren Formteil (2), bei gleichzeitigem partiellen Herunterlassen des Stempels (11) von letzterem, stattfindet.

20. Das Verfahren gemäß einem oder mehreren der obigen Ansprüche, **dadurch gekennzeichnet, dass** während oder nach der Extraktion aus der Form (1) die Maße des Schuhs (4a), gegenüber dem Zeitpunkt, als er in dem Hohlraum (14) enthalten war, plötzlich in einem Maßstabfaktor zunehmen, der etwas größer ist als ungefähr 1,6:1.

21. Das Verfahren gemäß einem oder mehreren der obigen Ansprüche, **dadurch gekennzeichnet, dass** der Leisten (24) ungefähr 30 Sekunden nach Extraktion aus der Form (1) in den Schuh (4b) eingesetzt wird.

22. Das Verfahren gemäß einem oder mehreren der obigen Ansprüche, **dadurch gekennzeichnet, dass** der Leisten (24) im Wesentlichen komplementär zu der inneren Oberfläche (12) des Schafts (8) und der Oberfläche (13) für das Aufliegen des Fußes des Benutzers des zu erhaltenden Schuhs (4) geformt ist und aus einem Material besteht, das geringe Wärmeleitfähigkeit hat.

23. Das Verfahren gemäß einem oder mehreren der obigen Ansprüche, **dadurch gekennzeichnet, dass** der Leisten (24) während des freien Abkühlens desselben ungefähr 5 Minuten lang in dem Schuh (4) gelassen wird.

24. Das Verfahren gemäß einem oder mehreren der obigen Ansprüche, **dadurch gekennzeichnet, dass** der Einsatz (25) aus dem Material besteht, das unter dem Akronym SEBS bekannt ist, angereichert mit einem Kohlenstoff-Füllstoff, der ihn elektrisch leitend macht.

## Revendications

1. Procédé pour fabriquer des chaussures antistatiques (4) comprenant les étapes consistant à :
a) fermer un moule (1) à l'intérieur duquel il y a une cavité (14) qui est formée de manière approximativement complémentaire par rapport à une chaussure (4a) à une échelle qui est convenablement réduite par rapport aux dimensions définitives de ladite chaussure (4), sa surface interne ayant, au niveau de la région qui forme la surface inférieure (5) de la semelle (6), au moins une partie relevée (17) à partir de laquelle une ou plusieurs broches (19) font saillie, au moins l'une (19a) desdites broches ayant une hauteur telle qu'elle vient en butée, avec son extrémité supérieure, dans la condition fermée dudit moule (1), contre la surface interne de ladite cavité (14), au niveau d'au moins une partie de la région qui forme la surface de repos (13) du pied de l'utilisateur ;
b) faire chauffer les parois internes de ladite cavité (14) à une température appropriée et y injecter une matière plastique (15) connue sous le nom de EVA (éthylène-acétate de vinyle) à l'état liquide ;
c) maintenir ledit moule (1) dans la condition fermée jusqu'à ce que ladite matière plastique (15) se solidifie, afin d'obtenir une chaussure (4a) à échelle réduite par rapport à ses dimensions définitives et dans la semelle (6) de laquelle il y a, au niveau de ladite au moins une partie relevée (17), au moins une fente (22) qui est raccordée à un ou plusieurs trous (23), formés par lesdites une ou plusieurs broches (19), dont au moins l'un (23a) est un trou traversant ;
d) ouvrir ledit moule (1) et extraire la chaussure (4a) résultante, et permettre l'expansion libre de ladite matière plastique (15) avec l'augmentation conséquente des dimensions de ladite chaussure (4b) ;
e) insérer dans ladite chaussure (4b) ainsi obtenue, une forme (24) qui est adaptée pour limiter le rétrécissement de ladite chaussure (4b) pendant le refroidissement de ladite matière plastique (15) ;
f) insérer, dans ladite au moins une fente (22) formée dans ladite semelle (6), au moins un insert (25) réalisé dans un matériau antistatique, qui est approximativement formée de manière complémentaire par rapport à ce dernier mais a une échelle légèrement réduite, et ayant une ou plusieurs broches (26) agencées au niveau desdits un ou plusieurs trous (23) prévus dans ladite semelle (6), dont au moins l'un (26a), agencé à l'intérieur de l'un (23a) desdits un ou plusieurs trous qui est un trou traversant, est agencé de sorte que son extrémité supérieure (27) est approximativement de niveau avec, ou fait saillie de, ladite surface (13) pour reposer le pied de l'utilisateur ;
g) permettre le libre refroidissement de ladite chaussure (4b) et le rétrécissement de ladite matière plastique (15), avec la réduction conséquente des dimensions de ladite chaussure (4) ainsi obtenue, de façon à obtenir la fixation desdites une ou plusieurs broches (26) à l'intérieur desdits un ou plusieurs trous (23) et dudit au moins un insert (25) dans ladite au moins une fente (22) ;
h) retirer ladite forme (24) de ladite chaussure (4) après stabilisation des dimensions de ladite chaussure (4).

2. Procédé selon la revendication 1, **caractérisé en ce que** ledit moule (1) est choisi pour être constitué par une partie de moule inférieure (2) qui est en métal et à l'intérieur de laquelle il y a au moins un premier siège (3) qui est formé de manière sensiblement complémentaire par rapport à une partie d'une chaussure (4a), à une échelle qui est réduite par rapport aux dimensions définitives de ladite chaussure (4).

3. Procédé selon la revendication 2, **caractérisé en ce que** ledit premier siège (3) formé dans ledit moule (1) est sensiblement formé de manière complémentaire, à une échelle réduite, par rapport à ladite surface inférieure (5) de ladite semelle (6) et par rapport à une partie de la surface externe (7) de la tige (8) de ladite chaussure (4) à obtenir.

4. Procédé selon la revendication 3, **caractérisé en ce que** ledit moule (1) comprend une partie de moule supérieure (9) qui est de préférence en métal et à l'intérieur de laquelle au moins un second siège (10) est formé de forme sensiblement complémentaire, à la même échelle que celle utilisée pour obtenir ledit premier siège (3), par rapport à une partie supplémentaire de ladite chaussure (4) à obtenir.

5. Procédé selon la revendication 4, **caractérisé en ce que** ledit second siège (10) formé dans ledit moule (1) est formé de manière sensiblement complémentaire, à la même échelle que celle utilisée pour obtenir ledit premier siège (3) par rapport à la partie résiduelle de ladite surface externe (7) de ladite tige (8) de ladite chaussure (4) à obtenir.

6. Procédé selon la revendication 5, **caractérisé en ce qu'**une prise mâle (11) est associé de manière coulissante à ladite partie de moule supérieure (9) et est formé de manière sensiblement complémentaire, à la même échelle que celle utilisée pour lesdits premier et second sièges (3, 10), par rapport à la surface interne (12) de ladite tige (8) et de ladite surface (13) pour laisser reposer le pied de l'utilisateur de ladite chaussure (4) à obtenir.

7. Procédé selon la revendication 6, **caractérisé en ce que** dans la position fermée dudit moule (1), lesdits premier et second sièges (3, 10) et ladite prise mâle (11) forment ladite cavité (14) à l'intérieur de laquelle est injectée ladite matière plastique (15) à l'état liquide.

8. Procédé selon la revendication 7, **caractérisé en ce que** les dimensions de ladite cavité (14) sont réduites, par rapport aux dimensions définitives de ladite chaussure (4), à une échelle d'approximativement 1:1,6.

9. Procédé selon une ou plusieurs des revendications précédentes, **caractérisé en ce que** ledit moule (1) a des moyens (16) pour alimenter ladite cavité (14) en matière plastique (15) à l'état liquide.

10. Procédé selon la revendication 9, **caractérisé en ce que** lesdits moyens d'alimentation sont constitués par un canal (16) qui est prévu de préférence à l'intérieur de ladite partie de moule inférieure.

11. Procédé selon la revendication 10, **caractérisé en ce que** ledit moule (1) comprend des moyens pour faire chauffer les parois internes de ladite cavité (14) et dudit canal (16) qui sont adaptés pour faciliter l'injection de ladite matière plastique (15) à l'état liquide.

12. Procédé selon la revendication 11, **caractérisé en ce que** la température de la surface interne de ladite cavité (14) et dudit canal (16), pendant l'injection de ladite matière plastique (15), est d'approximativement 130°C.

13. Procédé selon une ou plusieurs des revendications précédentes, **caractérisé en ce que** ladite au moins une partie relevée (17) a une forme de plan approximativement rectangulaire et est agencée approximativement au niveau de l'axe central longitudinal de ladite semelle (6).

14. Procédé selon la revendieation 13, **caractérisé en ce que** la surface latérale (18) de ladite partie relevée (17) est évasée et s'étend radialement en s'éloignant de ladite surface inférieure (5) de ladite semelle (6).

15. Procédé selon la revendication 14, **caractérisé en ce que** trois broches (19) font saillie de ladite partie relevée (17), l'une (19a) desdites broches étant agencée approximativement au niveau de la région centrale de la voûte plantaire et ayant une hauteur telle qu'elle vient en butée avec son extrémité supérieure, dans la condition fermée dudit moule (1), contre la surface inférieure de ladite prise mâle (11) au niveau de ladite surface (13) pour laisser reposer le pied de l'utilisateur.

16. Procédé selon la revendication 15, **caractérisé en ce que** lesdites broches (19) sont approximativement en forme de T, avec une branche (20) qui est sensiblement cylindrique et une tête (21) qui est de préférence approximativement de forme conique ou tronconique en coupe prise le long d'un plan central diamétral.

17. Procédé selon une ou plusieurs des revendications précédentes, **caractérisé en ce que**, après l'injection de ladite matière plastique (15) à l'état liquide, ledit moule (1) est maintenu dans la condition fermée pendant approximativement 5 minutes.

18. Procédé selon une ou plusieurs des revendications précédentes, **caractérisé en ce que**, dans ladite semelle (6) de ladite chaussure intermédiaire (4a), il y a trois trous (23) dont un seul est agencé approximativement au niveau de la région centrale de ladite voûte plantaire et passe complètement à travers ladite semelle (6), raccordant ladite fente (22) à ladite surface de repos (13) du pied de l'utilisateur.

19. Procédé selon la revendication 8, **caractérisé en ce que** l'ouverture dudit moule (1) se produit en soulevant de ladite partie de moule inférieure (2), ladite partie de moule supérieure (9), avec la descente partielle simultanée de cette dernière de ladite prise mâle (11).

20. Procédé selon une ou plusieurs des revendications précédentes, **caractérisé en ce que** pendant ou après l'extraction dudit moule (1), les dimensions de ladite chaussure (4a) augmentent brusquement, par rapport au moment où elle est contenue dans ladite cavité (14), selon un facteur d'échelle qui est légèrement supérieur à approximativement 1.6:1.

21. Procédé selon une ou plusieurs des revendications précédentes, **caractérisé en ce que** ladite forme (24) est insérée dans ladite chaussure (4b) approximativement 30 secondes après l'extraction du moule (1).

22. Procédé selon une ou plusieurs des revendications précédentes, **caractérisé en ce que** ladite forme (24) est formée de manière sensiblement complémentaire par rapport à ladite surface interne (12) de ladite tige (8) et ladite surface (13) pour laisser reposer le pied de l'utilisateur de ladite chaussure (4) à obtenir, et est réalisée dans un matériau qui a une faible conductivité thermique.

23. Procédé selon une ou plusieurs des revendications précédentes, **caractérisé en ce que** ladite forme (24) est maintenue dans ladite chaussure (4) pendant son refroidissement libre, pendant approximativement 5 minutes.

24. Procédé selon une ou plusieurs des revendications précédentes, **caractérisé en ce que** ledit insert (25) est réalisé dans une matière connue sous l'acronyme SEBS, enrichie d'une charge carbonée qui la rend électriquement conductrice.
